# EUROPEAN PATENT APPLICATION

(11) **EP 1 855 402 A1**
(43) Date of publication of application: **14.11.2007**
(21) Application number: 06300459.2
(22) Date of filing: 11.05.2006
(51) Int. Cl.: H04J 3/06, H04N 7/00

(54) **Transmission, reception and synchronisation of two data streams**

(71) Applicant: Koninklijke Philips Electronics N.V., 5621 BA Eindhoven (NL)
(72) Inventor: Martin, François, 75008 PARIS (FR); Ramanzin, Yves, 75008 PARIS (FR)
(74) Representative: Baque, Grégory Frank Yves

(57) **Abstract**

In digital mobile broadcast systems, data streams for audio and video are sent independently. As this means that both streams may arrive out of sync, they need to be synchronised for reproduction upon reception. For this, the relation between timestamps of both streams should be known. For broadcast, this is difficult because the information is usually not directly available upon the first reception of broadcasted streams and it cannot be send upon playback request. Therefore, the invention proposes to reset counters for generating timestamps upon the start of transmission of the broadcast. The incremental rate of the timestamps can be send on beforehand, as this information usually remains constant over a longer period in time. The invention provides methods for transmission, reception and synchronisation.

## Description

The invention relates to facilitating synchronisation of two streams of data and synchronisation of said two streams of data.

In 3GPP services, related media streams like a stream comprising video data and a stream comprising audio data to go with the video to form one multimedia stream or multimedia object, are sent as separate streams. Each stream has independent timestamps, of which the initial values - also known as the offset with an absolute time source or the wall clock - are different and of which the incremental rates are different. This hampers synchronisation of both streams for proper reproduction of the total multimedia stream.

Two solutions are known. The first is for point-to-point transmission of data. In this case, transfer or transmission of data is specifically requested and the information required to enable synchronisation - the values of the offset and the incremental rates of the timestamps - can be transmitted directly in reply to the request. It will be apparent to a person skilled in the art that this method is not very well suited for broadcast applications.

The second is for broadcast. In RTP/RTCP (Real Time Protocol or Real-Time Transport Protocol/RTP Control Protocol), Sender Reports (SR) are provided. These messages provide information to correct clock drift. A client needs to receive at least one SR message before reproduction of the mediastreams can be started. As the repetition rate of the SR messages has not been defined in RTP, this is an unreliable method and it may take a while before broadcast can actually start when the SR messages are broadcasted only every 10 seconds.

Furthermore, providing SR messages at a regular and frequent rate costs bandwidth. This is a considerable disadvantage, as bandwidth is currently still expensive for certain types of communication, like mobile communication.

Therefore, it is preferred to provide a more reliable method to synchronise the at least two mediastreams. The invention provides in a first aspect a method of transmitting data comprising two streams of interrelated data, comprising the steps of setting first timestamps for a first stream of data, wherein the values of the first timestamps are derived from a first clock value generator having a first offset with an absolute time source setting second timestamps for a second stream of data, wherein the values of the second timestamps are derived from a second clock value generator having a second offset with the absolute time source, transmitting the first stream of data with first timestamps transmitting the second stream of data with second timestamps and wherein at the time of transmission, the first offset corresponds to the second offset.

If the offsets correspond to one another, the synchronisation is facilitated as one unknown of the equation is eliminated. Corresponding is to be understood broadly: the offsets may have the same values or the offsets may have values that represent the same value. The latter may be the case when timestamps of the first stream of data are incremented with a first incremental rate and timestamps of the second stream of data are increment with a first incremental rate and the ratio is ten. In that case, an offset value of 1500 of the first offset would represent the same value as the value of 150 of the second offset.

An embodiment of this method further comprises the step of transmitting information on how the first offset corresponds to the second offset.

With such information, synchronisation is even further facilitated.

In another embodiment, the method further comprises the step of transmitting information from which a first incremental rate with which the first timestamps increase can be deduced and from which a second incremental rate with which the second timestamps increase can be deduced.

With this information, all unknowns of the equation for properly synchronising both streams is provided. In this way, both streams can be very easily synchronised.

In a second aspect, the invention provides a method of synchronising a first stream of data comprising first timestamps and a second stream of data comprising second timestamps, the two streams comprising interrelated data, the method comprising the steps of receiving information on the relation between the values of the first timestamps and the values of the second timestamps, the information not being comprised in either the first stream or the second stream, receiving the first stream of data, receiving the second stream of data, analysing a first timestamp corresponding to the first stream of data, analysing a second timestamp corresponding to the second stream of data and synchronising the first stream of data with the second stream of data using a value of the first timestamp, a value of the second timestamp and the relation between the value of the first timestamp and the value of the second timestamp.

As already mentioned, in a prior art broadcast reception scenario, obtaining the proper information for synchronising said two streams is not easy and may result in sub optimal reproduction. With additional information received on the relation between the values of the timestamps of both streams, synchronisation is facilitated.

In a third aspect, the invention provides a signal carrying data for a first stream of data with first timestamps having first values with a first offset with an absolute time source and a second stream of data with second timestamps with second values with a second offset with an absolute time source, wherein the first offset corresponds to the second offset.

In a fourth aspect, the invention provides and apparatus for transmitting two streams of interrelated data, comprising a data entry for receiving a first stream of data and a second stream of data, a controller unit conceived to set values of first timestamps for the first stream of data and to set values of second timestamps for the second stream of data, such that the values of the first timestamps have first offset with an absolute time source and the values of the second timestamps have a second offset with the absolute time source and the first offset corresponds to the second offset, and at least one transmitter unit for transmitting the first stream of data, the second stream of data and the respective corresponding timestamps.

A fifth aspect of the invention provides a circuit for synchronising two streams of interrelated data, comprising a receiver unit for receiving a first stream of data, a second stream of data and information on the relation between the values of the first timestamps and the values of the second timestamps, the information not being comprised in either the first stream or the second stream, an analysing unit for analysing first values of first timestamps of the first stream of data and second values of second timestamps of the second stream of data, and a synchronisation unit for synchronising the first stream of data and the second stream of data.

In a sixth aspect, the invention provides an apparatus for receiving and reproducing a first stream of data and a second stream of data, the apparatus comprising a receiving circuit for receiving a signal carrying the two streams, means for reproducing the data comprised in the first stream of data and the second stream of data; and a circuit for synchronising two streams of interrelated data, comprising a receiver unit for receiving a first stream of data, a second stream of data and information on the relation between the values of the first timestamps and the values of the second timestamps, the information not being comprised in either the first stream or the second stream, an analysing unit for analysing first values of first timestamps of the first stream of data and second values of second timestamps of the second stream of data and a synchronisation unit for synchronising the first stream of data and the second stream of data.

In a seventh aspect, the invention provides a computer programme product comprising code for enabling a controller unit to execute a method of transmitting data comprising two streams of interrelated data, comprising the steps of setting first timestamps for a first stream of data, wherein the values of the first timestamps are derived from a first clock value generator having a first offset with an absolute time source, setting second timestamps for a second stream of data, wherein the values of the second timestamps are derived from a second clock value generator having a second offset with the absolute time source transmitting the first stream of data with first timestamps transmitting the second stream of data with second timestamps, wherein at the time of transmission, the first offset corresponds to the second offset.

In a eighth aspect, the invention provides a computer programme product comprising code for enabling a controller unit to execute a method of synchronising a first stream of data comprising first timestamps and a second stream of data comprising second timestamps, the two streams comprising interrelated data, the method comprising the steps of receiving information on the relation between the values of the first timestamps and the values of the second timestamps, the information not being comprised in either the first stream or the second stream, receiving the first stream of data, receiving the second stream of data, analysing a first timestamp corresponding to the first stream of data, analysing a second timestamp corresponding to the second stream of data, synchronising the first stream of data with the second stream of data using a value of the first timestamp, a value of the second timestamp and the relation between the value of the first timestamp and the value of the second timestamp.

In a ninth aspect, the invention provides a data carrier carrying the computer programme product as claimed in claim 23.

The invention provides in a tenth aspect a data carrier carrying the computer programme product as claimed in claim 24.

These and other aspects of the invention will now be elucidated by means of drawings, in which:
Figure 1 shows an embodiment of the apparatus for transmitting tow streams of interrelated data; and
Figure 2 shows an embodiment for the apparatus of receiving two streams of interrelated data.

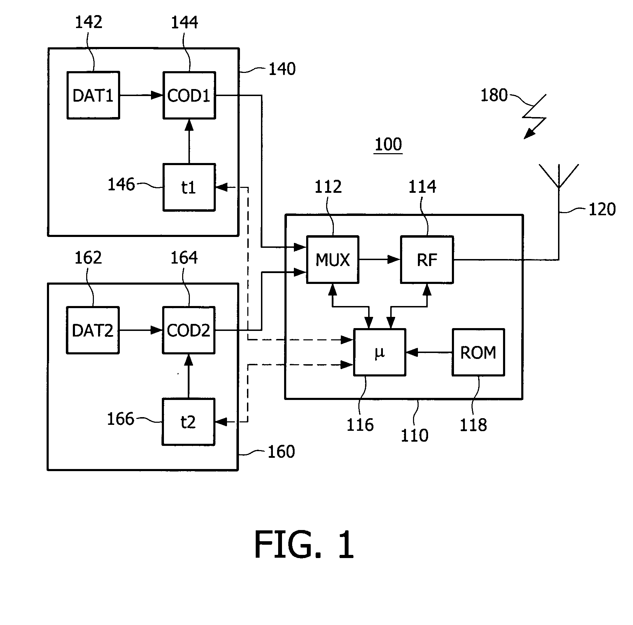

Figure 1 shows a data distribution system 100 for sampling and/or coding and transmitting data. The transmission of data is preferably done as data broadcasting. The data distribution system 100 comprises a first data-sampling unit 140, a second data-sampling unit 160 and a data transmission unit 110 as embodiment of the apparatus for transmitting two streams according to the invention.

The first data-sampling unit 140 comprises a first data providing unit 142, a first coding unit 144 and a first clock value generator 146. The second data-sampling unit 160 comprises a first data providing unit 162, a second coding unit 164 and a second clock value generator 166.

The data providing units can be embodied either as connectors for connecting a data acquisition device like a camera or a microphone, a memory like a harddisk or any other type of device that can provide or acquire data. First data provided by the first data providing unit 142 and second data provided by the second data providing unit 162 are interrelated. For example, the first data providing unit 142 provides a video image and the second data providing unit 162 provides corresponding audio data. Other examples of data are subtitles, meta data, data for executing interactive applications or overlay images.

The data provided is coded using the first coding unit 144 and the second coding unit 164. Data is sampled and coded and timestamps are generated for the sampled blocks by using timing information generated by the first clock value generator 146 and the second clock value generator 166.

The timing information may be provided in a standard way of timing - in seconds - but in this embodiment, the timing information is based on a per block basis. This means that the clock value increases per time block. The block can comprise for video a frame or a GOP (group of pictures, as defined by the MPEG standards) or for audio a sample. In the first case, the clock value will be incremented about every 50 milliseconds (at a 20 frames per second sample rate) or every 0,5 seconds; in the second case, the clock value will be incremented about every 23 microseconds (at a 44,1 kHz sampling rate). In this way, first timestamps are generated for a first stream of data generated by the first coding unit 144 and second timestamps are generated for a second stream of data generated by the second coding unit 164.

This time generation policy means automatically that the values of the timestamps for the first stream of data are not equal to the values of the timestamps for the second stream of data. This is in particular the case when the initial values of the clock value generators are not the same or even random. The latter means that the values of the clock value generators have an unknown offset with an absolute time source, like for example GMT or CET or the actual time in Paris. So the value of the first clock value generator has a first incremental rate and a first offset with an absolute time source and the second clock value generator has a second incremental rate and a second offset with an absolute time source.

If the scaling factor of the sampling rates (or the clock incrementing rates) and the offset between the initial values of the clock value generators are known, synchronisation of the first stream of data and the second stream of data can be established. That is, provided that data sampling of data provided by both data providing units starts simultaneously.

The data transmission unit 110 comprises a multiplexer 112, an RF (radio frequency) signal generator 114, a controller unit 116 and a ROM memory 118. The multiplexer 112 creates one data stream from the first stream of data and the second stream of data to form a formatted data stream ready for transmission. In this embodiment, the format of the data stream is UDP-IP (User Datagram Protocol - Internet Protocol), though in another embodiment, DVB-H is used. On top of UDP-IP, RTP/RTCP is used. As a person skilled in the art will readily appreciate, also other broadcast protocols may be used. The operation of the multiplexer is controlled by the controller unit 114.

The formatted, multiplexed data stream is provided to the RF signal generator 114, that creates an RF signal 180 that carries the data stream created by the multiplexer 112. The RF signal 180 is transmitted by means of an antenna 120.

For proper simultaneous playback of the first stream of data and the second stream of data, both streams need to be synchronised. Use of timestamps is well known to be used for this purpose. However, as already mentioned, the relation between the timestamps of the first stream of data and the second stream of data is not known in this case as the offset between the first clock value generator and the second clock value generator is not know or their initial values are not known.

Therefore, according to the invention, it is arranged that the first offset and the second offset correspond to one another at the moment the data stream is transmitted. This can be arranged in several ways.

A first way is to reset the first clock value generator 146 and the second clock value generator 166 at the moment a multimedia data source is sampled. This means that the offset between the first values of the first timestamps for the first stream of data and the second values of the second timestamps for the second stream of data is zero. For synchronisation of the first stream of data and the second stream of data, also the ratio of the first incremental rate and the second incremental rate should be known. This, however, is usually constant over a long period of time for a certain - for example - television channel, so it can be transmitted separately from the data stream. For this purpose - and for the purpose of resetting, as mentioned earlier - the first clock value generator 146 and the second clock value generator 166 are for this embodiment of the invention connected to the controller 116 by the dotted lines in Figure 1.

A second way to let the first offset correspond to the second offset is to modify the first values of the first timestamps of the first stream of data and the second values of the second timestamps of the second stream of data at the moment both streams are multiplexed. This is in particular an efficient approach at the moment no bi-directional connection can be established between the data transmission unit 110 and the data-sampling units. The modification is done for example such that at the start of transmission, the first blocks of each stream receive a timestamp with value zero and subsequent first timestamps and second timestamps are incremented at the first incremental rate and the second incremental rate, respectively. To perform this operation accurately, is it preferred to take into account the delay of the first coding unit 144 and the second coding unit 164 and/or any other components that can cause delay, like the controller 116.

Also these actions of the multiplexer are controlled by the controller 116. The controller receives instructions to perform these operations from the ROM memory 118 as embodiment of the data carrier according to the invention.

With the difference between the first offset and the second offset known - zero - the only further parameter required to synchronise the first stream of data and the second stream of data at a receiving side is the first incremental rate and the second incremental rate. As already mentioned, those incremental rates, which represent the sampling rate or coding rate of the streams, is usually constant of a long period of time and can be transmitted separately from the data stream.

In the preferred embodiment, this information is distributed in the Session Description Protocol, or SDP. This protocol is used to transfer other information as well, like the codec of the various streams (e.g. AAC, OGG, MP3, MPEG2, MPEG4, DivX, etc.) and the data rate, also known as the scaling factor. This information can be carried out of band for instance by an SMS message or any other type of service message. This message can also be sent in band, within the data stream, multiplexed with the first stream of data and the second stream of data.

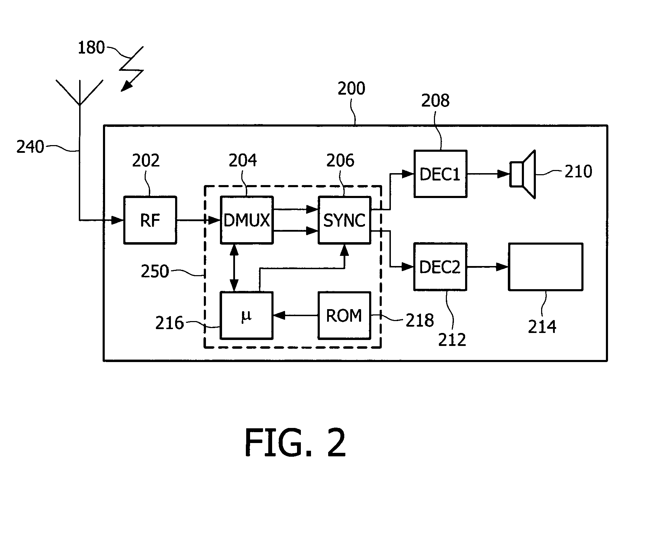

Figure 2 shows a receiving unit 200 as embodiment of the apparatus for receiving two streams according to the invention for receiving a signal transmitted by the data transmission unit 110. The receiving unit 200 comprises an RF receiving circuit 202, a demultiplexer 204, a synchronisation unit 206, a first decoder 208, a speaker 210, a second decoding unit 212, a screen 214, a controller unit 216 and a ROM memory 218. The RF receiving circuit 202 has an antenna 240 connected to it to pick up the RF signal 180. The demultiplexer 204, the synchronisation unit 206, the controller unit 216 and the ROM memory 218 form an embodiment of the synchronisation circuit according to the invention.

The data receiving unit 200 can be embodied as a mobile telephone or a personal digital assistant.

The RF signal 180 picked up by the antenna 240 is transferred to the RF receiving circuit 202 that retrieves a baseband signal from the received RF signal 180. This baseband signal comprises the datastream. Subsequently, the baseband signal is provided to the demultiplexer 204 that retrieves the first stream of data and the second stream of data. The demultiplexer 204 is also conceived to retrieve further information from the baseband signal as system messages with information related to the first stream of data and the second stream of data, like the first incremental rate and the second incremental rate.

Subsequently, the first stream of data and the second stream of data are provided to the synchronisation unit 206. The synchronisation unit synchronises the first stream of data and the second stream of data. As already discussed, it is the aim that the values of timestamps of both streams have the same offset, which means that there is no difference between the values of the first offset and the values of the second offset.

Together with already received information on the first incremental rate and the second incremental rate, the two streams of data can be synchronised and provided to the first decoder 208 and the second decoder 212. When the values of either the first timestamps or the second timestamps are known, by using either the first incremental rate or the second incremental rate, respectively, a point in time can be calculated when the timestamps were zero. Using the other incremental rate, the corresponding timestamp and in that way, the corresponding data of the other stream can be found.

As the decoders may have different throughput times, the codec can also be taken into account when synchronising the first stream of data and the second stream of data.

Finally, the decoded data is reproduced by the speaker 210 and the screen 214. As a person skilled in the art will readily appreciate, the speaker 210 and the screen 214 are merely embodiments of means for reproducing data. Furthermore, presence of the means for reproduction, as well as the presence of the decoders in the receiving unit 200 is not essential for the invention; they may also be provided in another device.

In this embodiment, the demultiplexer 204 and the synchronisation unit 206 are controlled by the controller 216. Instructions for proper operation of the controller 216 are stored in the ROM memory 218 which is an embodiment of the data carrier according to the invention.

A problem may occur at the moment a client (receiver) assumes that there is no difference in the value of the first offset and the value of the second offset and there actually is a difference in those values. Such problem may occur at the moment data is received from a server (transmitter) that is not conceived to work according to the invention. Therefore, an embodiment of the invention provides a flag in the SDP that the server uses a method that embodies the method according to the invention. This can for example be by providing a 1-bit flag in the SDP.

A person skilled in the art will readily appreciate that various parameters disclosed in the description may be modified and that various embodiments disclosed and/or claimed may be combined without departing from the scope of the invention.

For example, the data-sampling units can be replaced by data servers with an encoder or a transcoder. The latter is in particular useful when data to be transmitted is stored on a server in a first format (MPEG2) and is to be transmitted in a second format (MPEG4).

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa. When data is being referred to as audiovisual data, it can represent audio only, video only or still pictures only or a combination thereof, unless specifically indicated otherwise in the description of the embodiments.

Furthermore, the invention may also be embodied with less components than provided in the embodiments described here, wherein one component carries out multiple functions. Just as well may the invention be embodied using more elements than depicted in Figure 1 and/or Figure 2, wherein functions carried out by one component in the embodiment provided are distributed over multiple components. One example is that the function of the first controller 116 may be embedded in the multiplexer 112 and the function of the second controller may be embedded in the demultiplexer 204 and/or the synchronisation unit 206.

It is stipulated that the reference signs in the claims do not limit the scope of the claims, but are merely inserted to enhance the legibility of the claims.

### In summary, the invention relates to the following:

In for example digital mobile broadcast systems, data streams for for example audio and video are sent independently (and not for example in a transport stream). As this means that both streams may arrive out of sync, they need to be synchronised for reproduction upon reception. For this, the relation between timestamps of both streams should be known.

For broadcast, this is difficult because the information is usually not directly available upon the first reception of broadcasted streams and it cannot be send upon playback request, by nature of broadcast. Therefore, the invention proposes among others to reset counters for generating timestamps upon the start of production or transmission of the broadcast.

The incremental rate of the timestamps can be send on beforehand, as this information usually remains constant over a longer period in time. The invention provides among others methods for transmission, reception and synchronisation.

## Claims

1. Method of transmitting data comprising two streams of interrelated data, comprising the steps of:
a) Setting first timestamps for a first stream of data, wherein the values of the first timestamps are derived from a first clock value generator having a first offset with an absolute time source;
b) Setting second timestamps for a second stream of data, wherein the values of the second timestamps are derived from a second clock value generator having a second offset with the absolute time source;
c) Transmitting the first stream of data with first timestamps;
d) Transmitting the second stream of data with second timestamps;
e) Wherein at the time of transmission, the first offset corresponds to the second offset.

2. Method as claimed in claim 1, wherein, initially, the first offset and the second offset are not related and the values of the first timestamps are modified such that the first offset is changed to correspond to the second offset.

3. Method as claimed in claim 1, wherein, initially, the first offset and the second offset are not related and the values of the first timestamps and the values of the second timestamps are modified such that the first offset and second offset correspond with one another.

4. Method as claimed in claim 1, wherein the absolute time source represents GMT

5. Method as claimed in claim 1, wherein the absolute time source is a random time source of which the value increases linearly with time.

6. Method as claimed in claim 1, further comprising the step of transmitting information on how the first offset corresponds to the second offset.

7. Method as claimed in claim 1, wherein at the time of transmission, the value of the first offset represents the same value as the value of the second offset.

8. Method as claimed in claim 7, wherein the value of the first offset is the same as the value of the second offset.

9. Method as claimed in claim 1 or 6, wherein the method further comprises the step of transmitting information from which a first incremental rate with which the first timestamps increase can be deduced and from which a second incremental rate with which the second timestamps increase can be deduced.

10. Method of synchronising a first stream of data comprising first timestamps and a second stream of data comprising second timestamps, the two streams comprising interrelated data, the method comprising the steps of:
a) receiving information on the relation between the values of the first timestamps and the values of the second timestamps, the information not being comprised in either the first stream or the second stream;
b) receiving the first stream of data;
c) receiving the second stream of data;
d) analysing a first timestamp corresponding to the first stream of data;
e) analysing a second timestamp corresponding to the second stream of data;
f) synchronising the first stream of data with the second stream of data using a value of the first timestamp, a value of the second timestamp and the relation between the value of the first timestamp and the value of the second timestamp.

11. Method as claimed in claim 10, wherein the first stream is available as a broadcast stream

12. Method as claimed in claim 10, wherein the first stream is available according to the UDP-IP protocol

13. Method as claimed in claim 10, wherein the information on the relation between the value of the first timestamp and the value of the second timestamp has been received prior to first reception of the first stream.

14. Method as claimed in claim 10, wherein the information on the relation between the value of the first timestamp and the value of the second timestamp has been received by a service message separately from the stream.

15. Method as claimed in claim 10, wherein
a) the information on the relation between the values of the first timestamps and the values of the second timestamps comprises information from which a first incremental rate with which the first timestamps increase can be deduced and from which a second incremental rate with which the second timestamps increase can be deduced; and
b) said information on the first incremental rate and the second incremental rate is used to synchronise the first stream of data and the second stream of data.

16. Signal carrying data for
a) a first stream of data with first timestamps having first values with a first offset with an absolute time source;
b) a second stream of data with second timestamps with second values with a second offset with an absolute time source,
wherein the first offset corresponds to the second offset.

17. Signal as claimed in claim 16, wherein the data is organised according to the UDP-IP protocol.

18. Signal as claimed in claim 16, wherein the first offset is equal to the second offset.

19. Signal as claimed in claim 18, wherein the first offset and the second offset are equal to zero.

20. Apparatus for transmitting two streams of interrelated data, comprising:
a) a data entry for receiving a first stream of data and a second stream of data;
b) a controller unit conceived to set values of first timestamps for the first stream of data and to set values of second timestamps for the second stream of data, such that the values of the first timestamps have first offset with an absolute time source and the values of the second timestamps have a second offset with the absolute time source and the first offset corresponds to the second offset; and
c) at least one transmitter unit for transmitting the first stream of data, the second stream of data and the respective corresponding timestamps.

21. Circuit for synchronising two streams of interrelated data, comprising:
a) a receiver unit for receiving a first stream of data, a second stream of data and information on the relation between the values of the first timestamps and the values of the second timestamps, the information not being comprised in either the first stream or the second stream;
b) an analysing unit for analysing first values of first timestamps of the first stream of data and second values of second timestamps of the second stream of data; and
c) a synchronisation unit for synchronising the first stream of data and the second stream of data.

22. Apparatus for receiving and reproducing a first stream of data and a second stream of data, the apparatus comprising:
a) A receiving circuit for receiving a signal carrying the two streams;
b) Means for reproducing the data comprised in the first stream of data and the second stream of data; and
c) Circuit for synchronising two streams of interrelated data, comprising:
i) a receiver unit for receiving a first stream of data, a second stream of data and information on the relation between the values of the first timestamps and the values of the second timestamps, the information not being comprised in either the first stream or the second stream;
ii) an analysing unit for analysing first values of first timestamps of the first stream of data and second values of second timestamps of the second stream of data; and
iii) a synchronisation unit for synchronising the first stream of data and the second stream of data.

23. Computer programme product comprising code for enabling a controller unit to execute a method of transmitting data comprising two streams of interrelated data, comprising the steps of:
a) Setting first timestamps for a first stream of data, wherein the values of the first timestamps are derived from a first clock value generator having a first offset with an absolute time source;
b) Setting second timestamps for a second stream of data, wherein the values of the second timestamps are derived from a second clock value generator having a second offset with the absolute time source;
c) Transmitting the first stream of data with first timestamps;
d) Transmitting the second stream of data with second timestamps;
e) Wherein at the time of transmission, the first offset corresponds to the second offset.

24. Computer programme product comprising code for enabling a controller unit to execute a method of synchronising a first stream of data comprising first timestamps and a second stream of data comprising second timestamps, the two streams comprising interrelated data, the method comprising the steps of:
a) receiving information on the relation between the values of the first timestamps and the values of the second timestamps, the information not being comprised in either the first stream or the second stream;
b) receiving the first stream of data;
c) receiving the second stream of data;
d) analysing a first timestamp corresponding to the first stream of data;
e) analysing a second timestamp corresponding to the second stream of data;
f) synchronising the first stream of data with the second stream of data using a value of the first timestamp, a value of the second timestamp and the relation between the value of the first timestamp and the value of the second timestamp.

25. Data carrier carrying the computer programme product as claimed in claim 23.

26. Data carrier carrying the computer programme product as claimed in claim 24.
